# EUROPEAN PATENT SPECIFICATION

(11) **EP 4 079 807 B1**
(45) Date of publication and mention of the grant of the patent: **12.03.2025**
(21) Application number: 20901838.1
(22) Date of filing: 16.12.2020
(51) Int. Cl.: C08L 21/00, B60C 1/00, C08K 3/36, C08L 9/06, C08L 45/00

(54) **RUBBER COMPOSITION AND TIRE**
KAUTSCHUKZUSAMMENSETZUNG UND REIFEN
COMPOSITION DE CAOUTCHOUC ET PNEUMATIQUE

(30) Priority: 19.12.2019 JP 2019229801
(43) Date of publication of application: 26.10.2022
(73) Proprietor: BRIDGESTONE CORPORATION, Chuo-ku Tokyo 104-8340 (JP); Synthomer Adhesive Technologies LLC, Beachwood, Ohio 44122 (US)
(72) Inventor: SAITO, Koichi, Tokyo 104-8340 (JP); ITO, Nahoko, Tokyo 104-8340 (JP); BASU, Soumendra Kumar, Kingsport, Tennessee 37660 (US); INGRATTA, Mark William, Kingsport, Tennessee 37660 (US)
(74) Representative: Marks & Clerk LLP
(86) International application number: PCT/JP2020/047038
(87) International publication number: WO 2021/125242

(56) References cited:
- EP-A1- 3 216 828
- EP-A1- 3 228 657
- EP-A2- 3 070 121
- WO-A1-2018/105230
- JP-A- 2008 174 696
- JP-A- 2013 099 898
- JP-A- 2017 203 111
- JP-A- 2018 177 853
- JP-A- 2018 203 894

## Description

### Technical Field

The present invention relates to a rubber composition and a tire.

### Background Art

From the viewpoint of enhancing the safety of vehicles, studies have been made to enhance the braking performance and the driving performance of a tire not only on a dry road surface but on a wet road surface, a snowy or icy road surface, etc. as well. For example, a rubber composition has been disclosed (see, for example, patent document 1) which can provide a tread rubber having a high braking performance on a dry road surface and also on a wet slippery road surface, such as a manhole surface which is more slippery than an asphalt road surface. The rubber composition comprises 100 pars by mass of a rubber component (A) comprising 70% by mass or more of a natural rubber, 5 to 50 parts by mass of at least one thermoplastic resin (B) selected from a C₅-based resin, a C₅-C₉-based resin, a C₉-based resin, a terpene-based resin, a terpene-aromatic compound-based resin, a rosin-based resin, a dicyclopentadiene resin, and an alkylphenol-based resin, and 20 to 120 parts by mass of a filler (C) comprising silica, wherein the content of silica in the filler (C) is 50 to 100% by mass.

Further, a rubber composition for a tire has been disclosed (see, for example, patent document 2) which can enhance the grip performance of a tire on a dry road surface without impairing the grip performance on a wet road surface. The rubber composition comprises 100 parts by mass of a diene rubber component comprising 70 pars by mass or more of a styrene-butadiene rubber having an styrene content of 20 to 60% by mass; a group of fillers consisting of 50 to 300 parts by mass of silica, 0 to 150 pars by mass of an inorganic agent represented by the general formula mM1•xSiO_{y}•zH₂O, and 0 to 150 pars by mass of carbon black, the total amount of the silica and the inorganic agent being 200 to 350 parts by mass, and the total amount of the silica, the inorganic agent and the carbon black being 200 to 350 parts by mass; a softener in an amount of 70% by mass or more based on the total amount of the fillers; and 5 to 60 pars by mass of at least one resin having a softening point of 145°C or less.
Patent document 3 relates to a pneumatic tire, comprising a tread, the tread being formed from a rubber composition comprising a diene rubber.
Patent document 4 relates to a tire, comprising a tread formed from a rubber composition.
Patent document 5 relates to a tire rubber composition and a pneumatic tire using the tire rubber composition.

### Citation List

### Patent Literature

Patent document 1: International Publication No. WO 2015/079703
Patent document 2: Japanese Patent Laid-Open Publication No. 2008-184505
Patent document 3: European Patent Publication No. 3228657 A1
Patent document 4: European Patent Publication No. 3216828 A1
Patent document 5: Japanese Patent Laid-Open Publication No. 2008-174696

### Summary of Invention

### Technical Problem

However, the rubber compositions disclosed in patent documents 1 and 2 are required to further improve the balance between an enhancement of wet grip performance and a reduction in rolling resistance.

It is therefore an object of the present invention to provide a tire having an excellent wet grip performance and a low rolling resistance, and a rubber composition which can be used to produce the tire and a vulcanized rubber having excellent handling properties, thereby solving the above problem.

### Solution to Problem

A rubber composition according to the present invention comprises: a rubber component; a filler in an amount of 40 to 125 parts by mass per 100 parts by mass of the rubber component; and a hydrogenated resin in an amount of 5 to 50 parts by mass per 100 parts by mass of the rubber component, the resin having a softening point of higher than 110°C and a weight average molecular weight, as determined in terms of polystyrene, of 200 to 1200 g/mol,
wherein the hydrogenated resin is at least one selected from the group consisting of a hydrogenated C₅-based resin, a hydrogenated C₅-C₉-based resin, and a hydrogenated dicyclopentadiene-based resin,
wherein the rubber component comprises a styrene-butadiene rubber and a rubber having an isoprene skeleton, and
wherein the filler comprises silica.

In one or more embodiments, the content of the silica in the filler is 80% by mass or more.

In one or more embodiments, the styrene-butadiene rubber has no modified group at the ends of the main chain.

A tire according to the present invention uses the rubber composition as set forth in the application.

### Advantageous Effects of Invention

According to the present invention, it is possible to provide a tire having an excellent wet grip performance and a low rolling resistance, and a rubber composition which can be used to produce the tire and a vulcanized rubber having excellent handling properties.

### Description of Embodiments

### <Rubber Composition>

The rubber composition of the present invention comprises: a rubber component; a filler in an amount of 40 to 125 parts by mass per 100 parts by mass of the rubber component; and a hydrogenated resin in an amount of 5 to 50 parts by mass per 100 parts by mass of the rubber component, the resin having a softening point of higher than 110°C and a weight average molecular weight, as determined in terms of polystyrene, of 200 to 1200 g/mol.

The "hydrogenated resin having a softening point of higher than 110°C and a weight average molecular weight, as determined in terms of polystyrene, of 200 to 1200 g/mol" will be sometimes also referred to as "the hydrogenated resin of the present invention".

The conventional technique uses an inorganic filler, such as silica, to enhance wet grip performance. However, such a filler has the problem of increased energy loss. A method has been studied which involves blending of rubbers having different glass transition temperatures (Tg) to provide a tire tread rubber composition having an excellent balance between the wet grip performance and the low rolling resistance performance of a tire without impairing the wear resistance of the tire. However, such a rubber composition is insufficient in the low loss performance, the wear resistance, etc.

Further, various methods, including the use of a thermoplastic resin in an increased amount in a rubber composition, the use of an increased content of silica in a filler, and the use of a modified polymer for high dispersion of silica, have been studied in recent years. However, such methods have a limitation in solving the trade-off problem. There is also a problem of a decrease in the elastic modulus of a rubber especially in a technique which uses a large amount of a softener including a thermoplastic resin.

On the other hand, owing to the above-described features of the rubber composition of the present invention, a vulcanized rubber obtained from the composition has excellent handling properties, and a tire obtained from the composition has an excellent wet grip performance and a low rolling resistance.

Though the reasons for this are not fully elucidated yet, the following is conceivable.

The hydrogenated resin of the present invention has a low molecular weight, in particular, an average molecular weight, as determined in terms of polystyrene, of 1200 g/mol or less, and therefore is compatible with the rubber component. Furthermore, since the hydrogenated resin of the present invention has a high softening point, it will reinforce the rubber component and reduce the rolling resistance of a tire without significantly reducing or increasing the elastic modulus of a vulcanized rubber. In addition, because of the compatibility with the rubber component, the hydrogenated resin of the present invention can provide a tire with a flexibility necessary to grip a road surface, thereby enhancing the grip performance of the tire on a slippery road surface, namely the wet grip performance.

Further, the inclusion of the hydrogenated resin of the present invention in the rubber composition enables control of the elastic modulus (E') of a vulcanized rubber within a range which is not too high and not too low, leading to excellent handling properties of the vulcanized rubber.

The above may be the reasons why a tire, obtained from the rubber composition of the present invention, has an excellent wet grip performance and a low rolling resistance.

The rubber composition and the tire according to the present invention will now be described in detail.

### [Rubber Component]

The rubber composition of the present invention contains a rubber component. The rubber component comprises a styrene-butadiene rubber and a rubber having an isoprene skeleton

Otherwise, there is no particular limitation on the rubber component. Examples of usable rubbers include natural rubbers (NRs), and synthetic rubbers such as a styrene-butadiene rubber (SBR), a butadiene rubber (BR), an isoprene rubber (IR), a chloroprene rubber, a butyl rubber (IIR), a butyl halide rubber, an ethylene-propylene rubber (EPM, EPDM), a fluorine-containing rubber, a silicone rubber, and a urethane rubber. Among them, a natural rubber (NR) and a diene rubber such as a styrene-butadiene rubber (SBR), a butadiene rubber (BR), or an isoprene rubber (IR) are preferably used.

An unmodified rubber is preferably used as the rubber component.

The rubber component preferably contains no modified styrene-butadiene rubber. A styrene-butadiene rubber preferably has no modified group at a molecular end(s) (especially at the ends of the main chain).

Either a single rubber or a mixture of two or more rubbers may be used as the rubber component.

The rubber component comprises a rubber having an isoprene skeleton from the viewpoint of increasing the mechanical strength, the wear resistance, the tear strength, etc. of a vulcanized rubber. Further, the rubber component comprises a styrene-butadiene rubber from the viewpoint of enhancing the wet grip performance of a tire and reducing the rolling resistance of the tire.

### (Rubber Having an Isoprene Skeleton)

The inclusion of a rubber having an isoprene skeleton in the rubber component can increase the breaking strength of a vulcanized rubber. This makes it possible to reduce the rolling resistance of a tire. In addition, the vulcanized rubber is excellent in wear resistance, tear strength, etc.

A natural rubber (NR) and a polyisoprene rubber (IR) are examples of the rubber having an isoprene skeleton.

The content of the rubber having an isoprene skeleton in the rubber component is preferably 10 to 90% by mass, more preferably 20 to 80% by mass, and even more preferably 30 to 70% by mass from the viewpoint of reducing the rolling resistance of a tire and increasing the wear resistance, the tear strength, etc. of a vulcanized rubber.

### [Filler]

The rubber composition of the present invention contains a filler in an amount of 40 to 125 parts by mass per 100 parts by mass of the rubber component.

Reinforcement of a tire is insufficient when the content of the filler in the rubber composition is less than 40 parts by mass per 100 parts by mass of the rubber component, while when it exceeds 125 parts by mass, the rolling resistance of the tire cannot be reduced and the elastic modulus of the tire is too high, and therefore the wet grip performance of the tire is poor.

The content of the filler in the rubber composition is preferably 45 parts by mass or more, more preferably 50 parts by mass or more, and even more preferably 55 parts by mass or more per 100 parts by mass of the rubber component from the viewpoint of enhancing the wet grip performance. The content of the filler in the rubber composition is preferably 110 parts by mass or less, more preferably 100 parts by mass or less, and even more preferably 90 parts by mass or less per 100 parts by mass of the rubber component from the viewpoint of reducing the rolling resistance.

The filler comprises silica. Otherwise, there is no particular limitation on the filler. Examples of the filler include inorganic fillers such as silica, clay, talc, calcium carbonate, and aluminum hydroxide; and carbon black. Among them, silica and carbon black are preferred. The filler comprises at least silica.

### (Silica)

Examples of the silica include wet method silica (hydrous silicic acid), dry method silica (anhydrous silicic acid), calcium silicate, and aluminum silicate. Among them, wet method silica is preferred. These silicas may be used singly or in a combination of two or more.

The silica preferably has a nitrogen adsorption specific surface area (BET method) of 130 m²/g or more and less than 330 m²/g.

When the nitrogen adsorption specific surface area (BET method) of the silica is 130 m²/g or more, a tire can be adequately reinforced and the rolling resistance can be reduced. When the nitrogen adsorption specific surface area (BET method) of the silica is less than 330 m²/g, the elastic modulus of a tire is not too high and the tire has an excellent wet grip performance.

The nitrogen adsorption specific surface area (BET method) of the silica is more preferably 180 m²/g or more, even more preferably 190 m²/g or more from the viewpoint of reducing the rolling resistance of a tire and increasing the wear resistance, the tear strength, etc. of the tire. The nitrogen adsorption specific surface area (BET method) of the silica is more preferably 300 m²/g or less, even more preferably 280 m²/g or less, and still more preferably 270 m²/g or less from the viewpoint of enhancing the wet grip performance.

The content of the silica in the filler is preferably 80% by mass or more, more preferably 85% by mass or more, and even more preferably 90% by mass or more from the viewpoint of increasing the mechanical strength of a tire and reducing the rolling resistance.

The content of the silica in the rubber composition is preferably 30 parts by mass or more, more preferably 35 parts by mass or more, and even more preferably 40 parts by mass or more per 100 parts by mass of the rubber component from the viewpoint of increasing the mechanical strength of a tire and enhancing the wet grip performance. The content of the silica in the rubber composition is preferably 90 parts by mass or less, more preferably 85 parts by mass or less, and even more preferably 80 parts by mass or less per 100 parts by mass of the rubber component from the viewpoint of reducing the rolling resistance.

### (Carbon Black)

Preferably, the filler further contains carbon black. The carbon black is preferably contained in such an amount as to allow 80% by mass or more of silica to be contained in the filler.

The carbon black reinforces a vulcanized rubber and increases the wear resistance of the vulcanized rubber.

There is no particular limitation on the carbon black. Examples of the carbon black include carbon blacks of the types GPF, FEF, HAF, ISAF, and SAF. These carbon blacks may be used singly or in a combination of two or more.

The content of the carbon black in the rubber composition is preferably 0.5 parts by mass or more, more preferably 1 parts by mass or more, and even more preferably 2 pars by mass or more per 100 parts by mass of the rubber component from the viewpoint of increasing the wear resistance of a vulcanized rubber. The content of the carbon black in the rubber composition is preferably 15 parts by mass or less, more preferably 12 parts by mass or less, and even more preferably 9 pars by mass or less per 100 parts by mass of the rubber component from the viewpoint of maintaining the low-loss performance of the vulcanized rubber.

### [Hydrogenated Resin]

The rubber composition contains the hydrogenated resin having a softening point of higher than 110°C and a weight average molecular weight, as determined in terms of polystyrene, of 200 to 1200 g/mol. The content of the hydrogenated resin in the rubber composition is 5 to 50 parts by mass per 100 parts by mass of the rubber component.

If the softening point of the hydrogenated resin is 110°C or less, the resin cannot improve the wet performance of a tire. The softening point of the hydrogenated resin is preferably 115°C or more, more preferably 118°C or more, even more preferably 121°C or more, still more preferably 123°C or more, yet more preferably 125°C or more, yet more preferably 127°C or more, yet more preferably 128°C or more, and yet more preferably 129°C or more from the viewpoint of improving the wet performance. The softening point of the hydrogenated resin is preferably 145°C or less, more preferably 143°C or less, even more preferably 140°C or less, still more preferably 136°C or less, yet more preferably 135°C or less, and yet more preferably 133°C or less from the viewpoint of reducing the increase in tan δ not only at 0°C but also at 50°C which lies in a rolling range.

If the weight average molecular weight of the hydrogenated resin, as determined in terms of polystyrene, is less than 200 g/mol, the hydrogenated resin may precipitate from a tire, resulting in a failure to fully achieve the intended effect of the hydrogenated resin. If the weight average molecular weight exceeds 1200 g/mol, the hydrogenated resin will be incompatible with the rubber component.

The weight average molecular weight of the hydrogenated resin, as determined in terms of polystyrene, is preferably 300 g/mol or more, more preferably 500 g/mol or more, even more preferably 700 g/mol or more, and still more preferably 750 g/mol or more from the viewpoint of preventing precipitation of the hydrogenated resin from a tire and preventing degradation of the appearance of the tire. The weight average molecular weight of the hydrogenated resin, as determined in terms of polystyrene, is preferably 1150 g/mol or less, more preferably 1100 g/mol or less, even more preferably 1050 g/mol or less, still more preferably 950 g/mol or less, yet more preferably 930 g/mol or less, and yet more preferably 900 g/mol or less from the viewpoint of enhancing the compatibility of the hydrogenated resin with the rubber component and enhancing the effect of the hydrogenated resin. The hydrogenated resin is a high-softening point hydrocarbon resin prepared by polymerizing a mixture of C5 and higher hydrocarbon fractions, obtained by steam cracking of propane and ethane, using a Friedel-Crafts catalyst.

If the content of the hydrogenated resin in the rubber composition is less than 5 parts by mass per 100 parts by mass of the rubber component, the hydrogenated resin cannot produce the intended effect. If the content of the hydrogenated resin exceeds 50 parts by mass, the hydrogenated resin may precipitate from a tire, resulting in a failure to fully achieve the intended effect of the hydrogenated resin.

The content of the hydrogenated resin in the rubber composition is preferably 10 parts by mass or more, more preferably 15 parts by mass or more, and even more preferably 20 parts by mass or more per 100 parts by mass of the rubber component from the viewpoint of enhancing the effect of the hydrogenated resin. The content of the hydrogenated resin in the rubber composition is preferably 47 parts by mass or less, more preferably 43 parts by mass or less, and even more preferably 40 parts by mass or less per 100 parts by mass of the rubber component from the viewpoint of preventing precipitation of the hydrogenated resin from a tire and preventing degradation of the appearance of the tire.

The hydrogenated resin refers to a resin obtained by reduction/hydrogenation of a resin.

Resins usable as a raw material for the hydrogenated resin include a C₅-based resin, a C₅-C₉-based resin, a C₉-based resin, a terpene-based resin, a dicyclopentadiene-based resin, a terpene-aromatic compound-based resin, etc. These resins may be used singly or in a combination of two or more.

The C₅-based resin includes an aliphatic petroleum resin obtained by (co)polymerization of a C₅ fraction obtained by thermal cracking of naphtha in the petrochemical industry.

The C₅ fraction generally includes olefinic hydrocarbons such as 1-pentene, 2-pentene, 2-methyl-1-butene, 2-methyl-2-butene, and 3-methyl-1-butene; and diolefinic hydrocarbons such as 2-methyl-1,3-butadiene, 1,2-pentadiene, 1,3-pentadiene, and 3-methyl-1,2-butadiene. A commercially available product may be used as the C₅-based resin.

The C₅-C₉-based resin refers to a C₅-C₉-based synthetic petroleum resin, for example, a solid polymer obtained by polymerizing a petroleum-derived C₅-C₁₁ fraction using a Friedel-Crafts catalyst such as AlCl₃ or BF₃. A specific example of the C₅-C₉-based resin is a copolymer comprising styrene, vinyl toluene, α-methyl styrene, indene, or the like as a main component.

A resin having a minor amount of a C₉ or higher component is preferred as the C₅-C₉-based resin from the viewpoint of compatibility with the rubber component. The phrase "having a minor amount of a C₉ or higher component" herein means that the amount of a C₉ or higher component in the overall amount of the resin is less than 50% by mass, preferably less than 40% by mass. A commercially available product may be used as the C₅-C₉-based resin.

A resin (C₅-DCPD-based resin), which is a copolymer of a C₅ fraction and dicyclopentadiene (DCPD), may be used as a raw material for the hydrogenated resin.

When the amount of a dicyclopentadiene-derived component in the overall amount of the resin is 50% by mass or more, the C₅-DCPD-based resin is herein regarded as being included in the dicyclopentadiene resin. When the amount of a dicyclopentadiene-derived component in the overall amount of the resin is less than 50% by mass, the C₅-DCPD-based resin is herein regarded as being included in the C₅-based resin.

The hydrogenated resin is at least one selected from the group consisting of a hydrogenated C₅-based resin, a hydrogenated C₅-C₉-based resin, and a hydrogenated dicyclopentadiene-based resin (hydrogenated DCPD-based resin), more preferably at least one selected from the group consisting of a hydrogenated C₅-based resin and a hydrogenated C₅-C₉-based resin, and even more preferably a hydrogenated C₅-based resin from the viewpoint of enhancing the compatibility between the rubber component and the hydrogenated resin, enhancing the wet grip performance, and improving the balance between the rolling resistance and the handling properties.

### (Silane Coupling Agent)

The rubber composition preferably further contains a silane coupling agent. A silane coupling agent commonly used in the rubber industry can be used as the silane coupling agent.

### (Various Components)

In addition to the rubber component, the filler and the hydrogenated resin described above, the rubber composition of the present invention may optionally contain various components commonly used in the rubber industry, such as a softener, a resin other than the hydrogenated resin of the present invention, a processability improver, stearic acid, an antioxidant, zinc oxide, a vulcanization accelerator, and a vulcanizing agent as long as the object of the present invention is not impaired.

### [Rubber Composition Production Method]

There is no particular limitation on a method for producing the rubber composition of the present invention. For example, the rubber composition can be produced by mixing the rubber component, silica and the hydrogenated resin of the present invention, and optionally other selected components, and subjecting the mixture to kneading, warming, extrusion, etc.

<Tire>

The tire (pneumatic tire) of the present invention is obtained by using the rubber composition of the present invention.

As described above, a tire obtained from the composition of the present invention has an excellent wet grip performance and a low rolling resistance. Therefore, the composition of the present invention can be advantageously used to produce a tread portion of a tire.

The tire may be produced in different manners depending on the type and the members of the tire. In particular, the tire may be produced by subjecting an unvulcanized rubber composition to a building process, and vulcanizing the resulting product. Alternatively, the tire may be produced by subjecting an unvulcanized rubber composition to a preliminary vulcanization process to obtain a semi-vulcanized rubber, subjecting it to a building process, and then subjecting the resulting product to a main vulcanization process. Besides ordinary air or air with adjusted partial pressure of oxygen, an inert gas such as nitrogen, argon, or helium can be used as a gas to be filled into the tire.

### Examples

The following examples illustrate the present invention in greater detail and are not intended to limit the scope of the invention.

### <Preparation of Rubber Composition>

The rubber compositions of Examples and Comparative Examples were prepared by mixing the components shown in Tables 1 and 2 according to the formulations shown in the tables using an ordinary Banbury mixer. The maximum temperature of the mixture was set to 170°C. The following are details of the components shown in Tables 1 and 2.

### [Rubber Component]

NR: natural rubber, TSR20
SBR: trade name "SBR #1500", manufactured by JSR Corporation, the amount of bound styrene: 24%

### [Filler, Silane Coupling Agent]

CB: carbon black, N134, manufactured by Asahi Carbon Co., Ltd., nitrogen adsorption specific surface area (N₂SA) = 146 m²/g
Silica: trade name "Nipsil AQ", manufactured by Tosoh Silica Corporation, nitrogen adsorption specific surface area (BET method) = 205 m²/g
Silane coupling agent: trade name "Si69", manufactured by Evonic Degussa GmbH

### [Softener]

### (Hydrogenated Resin)

Hydrogenated C₅-based resin: trade name "registered trademark Impera E1780", manufactured by Eastman Chemical Company
(Non-Hydrogenated Resin)
C₉ resin: manufactured by JXTG Energy Corporation
Terpen phenol resin: manufactured by Yasuhara Chemical Co., Ltd.

### (Oil)

Oil: trade name "Diana Process NH-70S", manufactured by Idemitsu Kosan Co., Ltd.

The softening point (Ts) and the weight average molecular weight (Mw) of each resin as a softener are shown in Table 2.

### [Various Components]

6C: antioxidant, N-phenyl-N'-(1,3-dimethylbutyl)-p-phenylenediamine, trade name "Nocrac 6C", manufactured by Ouchi Shinko Chemical Industrial Co., Ltd.
DM: vulcanization accelerator, di-2-benzothiazolyl disulfide, trade name "SANCELER DM", manufactured by Sanshin Chemical Industry CO., LTD.
NS: vulcanization accelerator, N-t-butyl-2-benzothiazyl sulfeneamide, trade name "NOCCELER NS", manufactured by Ouchi Shinko Chemical Industrial Co., Ltd.
DPG: vulcanization accelerator, 1,3-diphenylguanidine, trade name "SANCELER D", manufactured by Sanshin Chemical Industry CO., LTD.

### <Vulcanization of Rubber Composition and Evaluation of Vulcanized Rubber>

### 1. Rolling resistance

For a vulcanized rubber specimen obtained by vulcanizing each of the rubber compositions at 160°C for 15 minutes, a loss tangent (tan δ) was measured using a viscoelasticity measuring device under the conditions of: a dynamic strain of 1%; a frequency of 52 Hz; and a measurement temperature of 50°C.

The measured values of the Examples and Comparative Examples were expressed in terms of an index (RR index) with the tan δ of the vulcanized rubber specimen of Comparative Example 3 as 100. A lower index value indicates a lower and thus better rolling resistance. The results are shown in Table 2 below.

### 2. Wet grip performance

For a vulcanized rubber specimen obtained by vulcanizing each of the rubber compositions at 160°C for 15 minutes, a loss tangent (tan δ) was measured using a viscoelasticity measuring device under the conditions of: a dynamic strain of 1%; a frequency of 52 Hz; and a measurement temperature of 0°C.

The measured values of the Examples and Comparative Examples were expressed in terms of an index (Wet index) with the resistance value of Comparative Example 3 as 100. A higher index value indicates a higher resistance value, thus indicating a superior wet grip performance. The results are shown in Table 2 below. The allowable range is 150 or more.

### 3. Handling Properties of Vulcanized Rubber

For a vulcanized rubber specimen obtained by vulcanizing each of the rubber compositions at 160°C for 15 minutes, a storage elastic modulus (E') was measured using a viscoelasticity measuring device under the conditions of: a temperature of 30°C; a dynamic strain of 1%; and a frequency of 52 Hz.

An E' index was calculated based on the following equation, taking the measured value of the vulcanized rubber of Comparative Example 3 as 100. E' index = (E' of an Example other than Comparative Example 3 / E' of Comparative Example 3) × 100

The handling properties of a vulcanized rubber are not good if the E' index is too low or too high. The allowable range of the index value is 102 to 120.

**Table 1**

| Composition | |
|---|---|
| NR | 50 |
| SBR | 50 |
| CB | 5 |
| Silica | 60 |
| Silane coupling agent | 4.8 |
| Softener (described in Table 2) | 30 |
| Stearic acid | 1 |
| Zinc oxide | 2.5 |
| Sulfur | 1.3 |
| 6C | 1.5 |
| DM | 0.7 |
| NS | 1.8 |
| DPG | 1.4 |

(parts by mass)

**Table 2**

| | | Example 1 | Example 2 | Example 3 |
|---|---|---|---|---|
| | Structure | Hydrogenated C₅-based resin | Hydrogenated DCPD (C₅) resin 1 | Hydrogenated DCPD (C₅) resin 2 |
| | Ts (°C) | 130 | 137 | 113 |
| | Mw | 800 | 1000 | 700 |
| Evaluation | Wet index (0°C tanδ) | 182 | 186 | 159 |
| | RR index (50°C tanδ) | 93 | 94 | 96 |
| | E' index | 104 | 113 | 110 |

| | | Comparative Example 1 | Comparative Example 2 | Comparative Example 3 |
|---|---|---|---|---|
| | Structure | C₉ resin | terpene phenol resin | Oil |
| | Ts (°C) | 90 | 145 | - |
| | Mw | 1065 | 1120 | - |
| Evaluation | Wet index (0°C tanδ) | 230 | 160 | 100 |
| | RR index (50°C tanδ) | 73 | 63 | 100 |
| | E' index | 155 | 156 | 100 |

The results of the examples shown in Table 2 indicate that the vulcanized rubbers of the rubber compositions according to the present invention have excellent handling properties, and that the use of the rubber compositions can produce a tire having an excellent wet grip performance and a low rolling resistance.

### Industrial Applicability

The use of the rubber composition of the present invention can produce a tire having an excellent wet grip performance and a low rolling resistance. Therefore, the rubber composition of the present invention can be advantageously used in the production of tires for passenger cars, trucks, buses, etc.

## Claims

1. A rubber composition comprising:
a rubber component;
a filler in an amount of 40 to 125 parts by mass per 100 parts by mass of the rubber component; and
a hydrogenated resin in an amount of 5 to 50 parts by mass per 100 parts by mass of the rubber component, the resin having a softening point of higher than 110°C and a weight average molecular weight, as determined in terms of polystyrene, of 200 to 1200 g/mol,
wherein the hydrogenated resin is at least one selected from the group consisting of a hydrogenated C₅-based resin, a hydrogenated C₅-C₉-based resin, and a hydrogenated dicyclopentadiene-based resin,
wherein the rubber component comprises a styrene-butadiene rubber and a rubber having an isoprene skeleton, and
wherein the filler comprises silica.

2. The rubber composition according to claim 1, wherein the content of the silica in the filler is 80% by mass or more.

3. The rubber composition according to claim 1 or 2, wherein the styrene-butadiene rubber has no modified group at the ends of the main chain.

4. A tire using the rubber composition according to any one of claims 1 to 3.

## Patentansprüche

1. Kautschukzusammensetzung, Folgendes umfassend:
eine Kautschukkomponente;
einen Füllstoff in einer Menge von 40 bis 125 Masseteilen pro 100 Masseteile der Kautschukkomponente; und
ein hydriertes Harz in einer Menge von 5 bis 50 Masseteilen pro 100 Masseteile der Kautschukkomponente, wobei das Harz einen Erweichungspunkt von mehr als 110 °C und ein gewichtsmittleres Molekulargewicht, wie es in Bezug auf Polystyrol bestimmt wird, von 200 bis 1 200 g/mol aufweist,
wobei das hydrierte Harz mindestens eines ist, das ausgewählt ist aus der Gruppe, bestehend aus einem hydrierten Harz auf C₅-Basis, einem hydrierten Harz auf C₅-C₉-Basis, und einem hydrierten Harz auf Dicyclopentadien-Basis,
wobei die Kautschukkomponente einen Styrol-Butadien-Kautschuk umfasst und einen Kautschuk mit einem Isopren-Skelett, und
wobei der Füllstoff Siliziumdioxid umfasst.

2. Kautschukzusammensetzung nach Anspruch 1, wobei der Gehalt am Siliziumdioxid in dem Füllstoff 80 Masse-% oder mehr beträgt.

3. Kautschukzusammensetzung nach Anspruch 1 oder 2, wobei der Styrol-Butadien-Kautschuk keine modifizierte Gruppe an den Enden der Hauptkette aufweist.

4. Reifen unter Verwendung der Kautschukzusammensetzung nach einem der Ansprüche 1 bis 3.

## Revendications

1. Composition de caoutchouc comprenant :
un composant en caoutchouc :
une charge en une quantité de 40 à 125 parties en masse pour 100 parties en masse du composant en caoutchouc ; et
une résine hydrogénée en une quantité de 5 à 50 parties en masse pour 100 parties en masse du composant en caoutchouc, la résine ayant un point de ramollissement supérieur à 110°C et un poids moléculaire moyen en poids, déterminé en termes de polystyrène, de 200 à 1 200 g/mol,
dans laquelle la résine hydrogénée est au moins une résine choisie dans le groupe constitué d'une résine hydrogénée à base de C₅, d'une résine hydrogénée à base de C₅-C₉, et d'une résine hydrogénée à base de dicyclopentadiène,
dans laquelle le composant en caoutchouc comprend un caoutchouc styrène-butadiène et un caoutchouc ayant un squelette isoprène, et
dans lequel la charge comprend de la silice.

2. Composition de caoutchouc selon la revendication 1, dans laquelle la teneur en silice de la charge est de 80 % en masse ou plus.

3. Composition de caoutchouc selon la revendication 1 ou 2, dans laquelle le caoutchouc styrène-butadiène ne présente pas de groupe modifié aux extrémités de la chaîne principale.

4. Pneumatique utilisant la composition de caoutchouc selon l'une quelconque des revendications 1 à 3.
